# EUROPEAN PATENT APPLICATION

(11) **EP 4 729 351 A1**
(43) Date of publication of application: **22.04.2026**
(21) Application number: 25208941.2
(22) Date of filing: 15.10.2025
(51) Int. Cl.: B60N 2/01

(54) **MOTOR VEHICLE WITH PARTICULAR CONFIGURATION OF THE SEATS AND WITH AN ANTERIORLY TAPERED BODY**

(30) Priority: 17.10.2024 IT 202400023154
(71) Applicant: FERRARI S.p.A., 41100 Modena (IT)
(72) Inventor: FULLIN, Francesco, 41100 Modena (IT); MARLIER, Renaud, 41100 Modena (IT); NIVOLA, Angelo, 41100 Modena (IT); WOLFF, Alessandro, 41100 Modena (IT)
(74) Representative: Studio Torta S.p.A.

(57) **Abstract**

A motor vehicle (1) having a roll axis (X) and a pitch axis (Y), as well as comprising a body (2) internally defining a passenger compartment (5) with a first and a second sitting area (9, 10) for a driver and a passenger of the motor vehicle, the first and second sitting areas (9, 10) being aligned with each other according to the pitch axis (Y) and comprising a first seat (12) and a second seat (13), respectively, the first seat (12) being distinct from the body (2) and supported by the body (2) above a portion (P) of the body (2), characterized in that the second seat (13) is fixed in a rearward position relative to the first seat (12) according to the roll axis

(X) .

## Description

### CROSS-REFERENCE TO RELATED APPLICATIONS

This patent application claims priority from Italian patent application no. 102024000023154 filed on October 17, 2024, the entire disclosure of which is incorporated herein by reference.

### TECHNICAL FIELD

The invention relates to a motor vehicle and more in particular a two-seat sports motor vehicle, specifically with high performance.

### PRIOR ART

As is known, one of the aspects that affects the performance of a sports motor vehicle is the aerodynamic efficiency of the body.

Therefore, in general, there is often a need in the sector to improve the aerodynamic efficiency of the body, with particular reference to a front portion thereof.

Furthermore, the need is generally felt, also but not only from a point of view of the aerodynamic efficiency, for the passenger compartment of a two-seat sports motor vehicle to be as compact as possible, in particular both in width and in height, namely according to the pitch axis of the motor vehicle, while still safeguarding the necessary comfort requirements for the driver and the possible passenger next to said driver.

In practice, this can lead to a further need to provide solutions to facilitate as much as possible a forward tapering of the front portion of the body, in particular also in the area of the lateral boundaries of the passenger compartment, as well as in height.

An object of the invention is to meet at least one of the needs set forth above, preferably in a simple manner and in accordance with the pre-established aesthetic specifications for the motor vehicle.

### DESCRIPTION OF THE INVENTION

The object is achieved by a motor vehicle as defined in the independent claims.

The dependent claims define particular embodiments of the invention.

### BRIEF DESCRIPTION OF THE DRAWINGS

In order to better understand the invention, an embodiment thereof is described in the following by way of non-limiting example and with reference to the accompanying drawings, wherein:
- Figure 1 is a perspective view of a motor vehicle according to the invention,
- Figure 2 is a top perspective view, with parts removed for clarity, of a front portion of the motor vehicle of Figure 1,

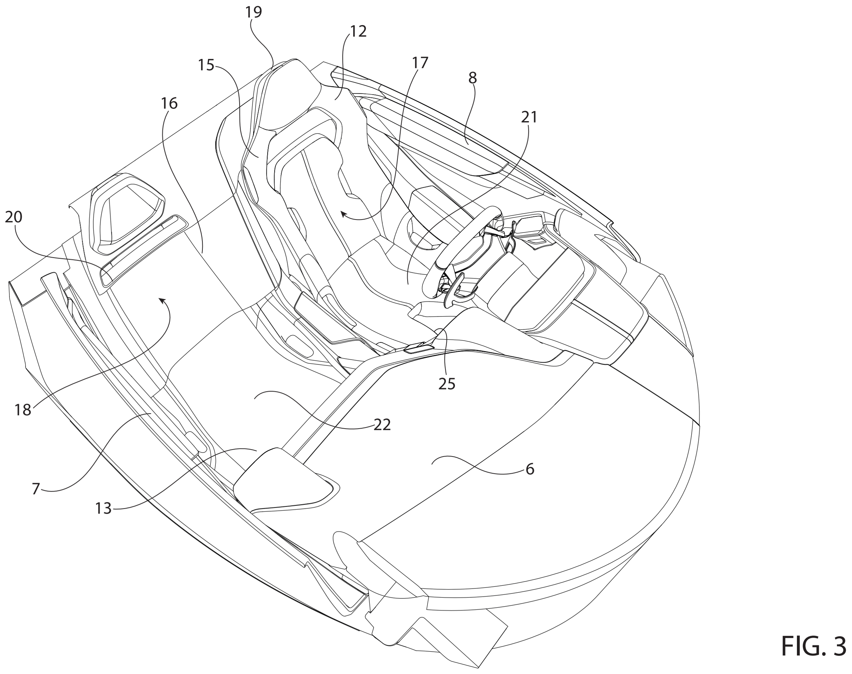

- Figure 3 is an enlarged perspective view of a passenger compartment of the motor vehicle 1,
- Figure 4 is a plan view of the passenger compartment of Figure 3, and
- Figure 5 is a superimposed plan view of a portion of front chassis of a vehicle according to the prior art, represented by dashed lines, and of a portion of front chassis of the motor vehicle of Figure 1, represented by solid lines.

### EMBODIMENTS OF THE INVENTION

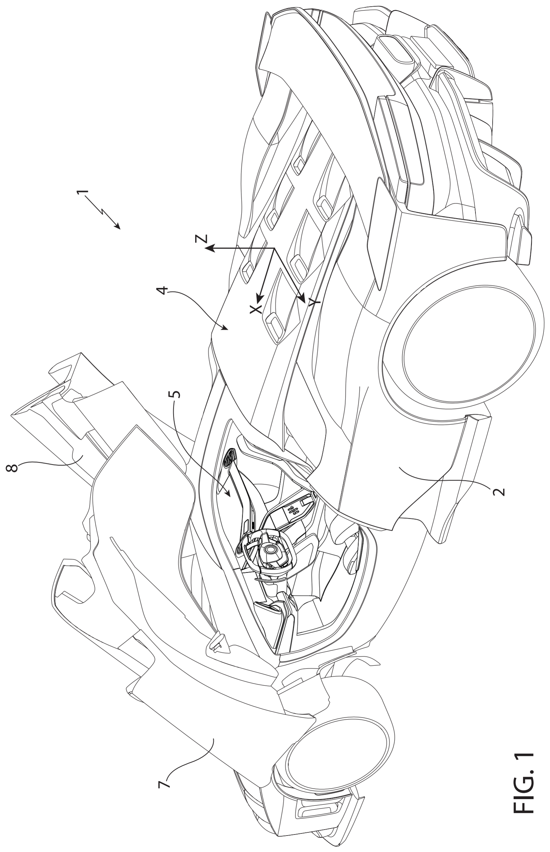

In Figure 1, reference numeral 1 is used to indicate, as a whole, a motor vehicle.

The motor vehicle 1 has a body reference frame, in particular defined by a roll axis X, a pitch axis Y, and a yaw axis Z.

The roll axis or longitudinal axis X coincides with a normal forward direction of the motor vehicle 1. The motor vehicle 1 also has, in particular, a reverse direction, opposite the forward direction, and thus the roll axis X specifically.

The pitch axis Y is horizontal and orthogonal to the roll axis X.

The yaw axis Z is orthogonal both to the roll axis X, and the pitch axis Y, therefore it has at least one vertical component, namely along a direction of the Earth's gravitational acceleration; more in particular, the vertical component of the yaw axis Z is directed upward, namely in a manner opposite the direction of the Earth's gravitational acceleration.

From here on, expressions such as front, rear, anteriorly, posteriorly, in front, behind, and the like, are to be understood with reference to the roll axis X.

Similarly, although in an independent manner, expressions such as higher, lower, above, below, and the like, are to be understood with reference to the yaw axis Z.

According to a non-limiting embodiment, the motor vehicle 1 has a vertical geometric centerline plane, namely a vertical plane centered between the extreme lateral limits of the motor vehicle 1 according to the pitch axis Y, the extreme lateral limits being opposite each other according to the pitch axis Y.

In other words, according to a non-limiting embodiment, the vertical geometric centerline plane is a vertical plane centered between two vertical planes respectively passing by the extreme points laterally opposite the motor vehicle 1 according to the pitch axis Y.

According to a non-limiting embodiment, the vertical geometric centerline plane contains two axes parallel to the axes X, Z, respectively.

The motor vehicle 1 comprises a body 2, in particular comprising a chassis 3, defining a skeleton or frame of the motor vehicle 1, as well as comprising a bodywork 4 carried by the chassis 3 and defining the outer surfaces of the motor vehicle 1.

The body 2 or the chassis 3 defines an interior of the motor vehicle 1, namely internally defines a passenger compartment 5 of the motor vehicle 1. In particular, the body 2 or the chassis 3 comprises a platform P defining a floor of the passenger compartment 5. Therefore, from here on, the expressions platform and floor can be considered synonyms and forming part of the body 2 or of the passenger compartment 5. The bodywork 4 and thus the body 2 can also define the inner surfaces of the passenger compartment 5, namely the surfaces exposed within the passenger compartment.

Therefore, in this text, the body 2 can comprise or comprises the inner coverings of the motor vehicle 1 which define or have the inner surfaces of the passenger compartment 5. The inner coverings can comprise parts with fabrics, elements comprising plastic, elements comprising composite materials (e.g. carbon fiber), elements comprising metals, etcetera, without any loss of generality.

For example, the motor vehicle 1 comprises a dashboard or dash panel 6 (in particular within the passenger compartment 5), which could be considered part of the body 2 or of the bodywork 4.

The motor vehicle 1 further comprises a pair of side doors 7, 8, which are each coupled to the body 2 or more precisely to the chassis 3 in a manner selectively movable between an open configuration to allow access into the passenger compartment 5, in particular to a user of the motor vehicle 1 (for example a driver or a passenger), and a closed configuration to delimit (at least in part) laterally, namely according to the pitch axis Y, the passenger compartment 5.

In fact, in the closed configuration 5, the doors 7, 8 define portions of the lateral boundaries (with reference to the pitch axis Y) of the passenger compartment 5, thereby at least partially delimiting the passenger compartment 5. Here, in particular, the doors 7, 8 have respective inner sides exposed in the passenger compartment 5.

Preferably, the doors 7, 8 are the only side doors of the motor vehicle 1, namely there are no other side doors of the motor vehicle 1.

The passenger compartment 5 has two sitting areas 9, 10 aligned with or side by side each other according to the pitch axis Y. The sitting areas 9, 10 are for the driver and for the (possible) passenger of the motor vehicle 1, in particular respectively.

In the closed configuration, the doors 7, 8 are laterally adjacent the sitting areas 9, 10, respectively. Clearly, with the doors 7, 8 in the open configuration, the body 2 has towards the outside of the motor vehicle 1 two respective openings, in particular for the access of the driver and the passenger, respectively, to the sitting areas 9, 10.

According to a non-limiting embodiment, for example at least according to what is illustrated in the drawings, the expression "adjacent" is replaced by or added to "contiguous" or "sharing the boundary of", namely "having a boundary in common". In other words, according to a non-limiting embodiment, in the respective closed configurations, the doors 7, 8 are respectively laterally contiguous to the sitting areas 9, 10 and/or respectively laterally sharing the boundary of sitting areas 9, 10.

Preferably, the sitting areas 9, 10 are the only sitting areas of the motor vehicle 1, which is therefore a two-seat motor vehicle. In other words, the motor vehicle 1 does not have any other sitting areas for further passengers besides the sitting areas 9, 10. More in detail, the sitting areas 9, 10 aligned with or side by side each other are front sitting areas; there are no rear sitting areas, i.e. sitting areas arranged behind the sitting areas 9, 10.

The motor vehicle 1 comprises a steering wheel 11 and/or pedals (not illustrated, for example a brake pedal and an accelerator pedal) in the area of the sitting area 9 for the driver.

The motor vehicle 1 further comprises two seats 12, 13 in the area of the sitting areas 9, 10, respectively. In other words, the sitting areas 9, 10 comprise the seats 12, 13, respectively. Specifically, the sitting area 9 also comprises the steering wheel 11 and/or the pedals.

The seat 12 is in particular for the driver, although not necessarily. Therefore, herein the seat 13 is for the passenger.

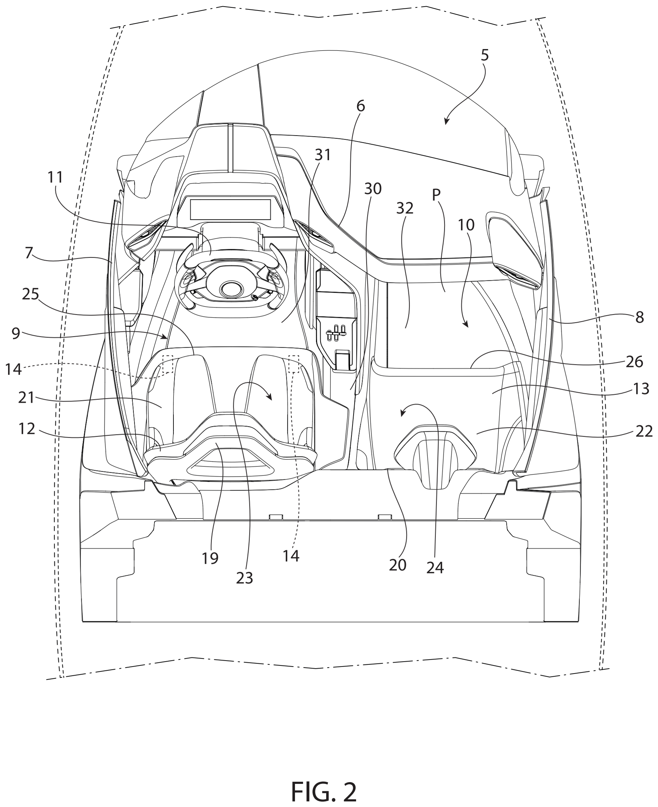

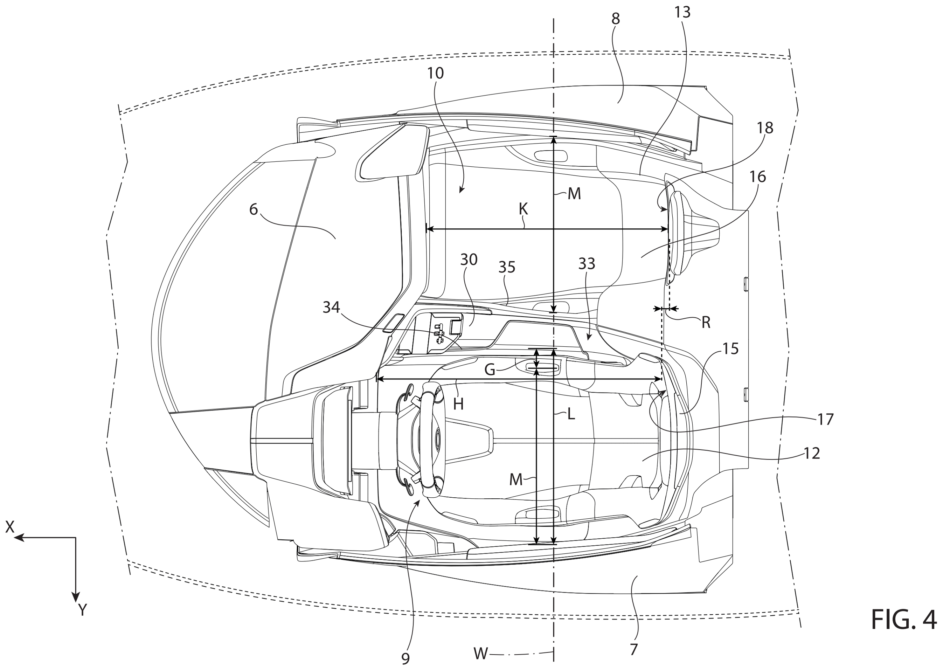

According to a non-limiting embodiment, as for example illustrated in Figures 2 and 4, the sitting area 9 comprises one single seat, precisely the seat 12, just as the sitting area 10 comprises one single seat, precisely the seat 13. In other words, according to a non-limiting embodiment, as for example illustrated in Figures 2 and 4, the seat 12 is the only seat of the sitting area 9, just as the seat 13 is the only seat of the sitting area 10.

According to a non-limiting embodiment, as for example derivable from the figures, the sitting areas 9, 10 (and/or the seats 12, 13) are off-center relative to the vertical geometric centerline plane, namely entirely arranged on the opposite sides of the vertical geometric centerline plane and spaced apart from the vertical geometric centerline plane according to the pitch axis Y.

The seat 12 is distinct from the body 2 or more precisely from the chassis 3 and is supported by the body 2 or more precisely by the chassis 3 above a portion of the latter, for example forming part of the platform or floor P of the body 2 or of the chassis 3.

More in detail, the seat 12 is coupled to the body 2 or to the underlying portion of the body 2 by means of a coupling means or device 14 of the motor vehicle 1. The coupling means or device 14 can comprise or be defined by one or more elements of various kind, among which threaded elements, such as screws or bolts, adhesive bodies or layers, guides, mechanisms of various type, such as articulated mechanisms, etcetera, without any loss of generality.

In particular, the seat 12 is coupled to the body 2 or to the chassis 3 in a movable manner relative to the body 2 or chassis 3 between a (in particular limited) plurality of positions relative to the body 2 or chassis 3; for example, the seat 12 can translate (in particular can only translate) along the roll axis X, for example between two end strokes, more in particular by means of one or more straight guides (not specifically illustrated) extending along the roll axis X and forming part of the coupling device 14.

The seat 13 is fixed in a rearward position relative to the seat 12 according to the roll axis X. In particular, this is valid for any of the positions (permissible by means of the coupling device 14) of the seat 12 relative to the body 2 or chassis 3, namely regardless of the position of the seat 12 adjustable by means of the coupling device 14.

Alternatively or additionally, the seat 13 is defined, in particular directly, by surfaces of the body 2 or of the chassis 3 which are exposed in the passenger compartment 5 and which are thus preferably part of the inner surfaces of the passenger compartment 5 defined by the body 2 or by the bodywork 4 or by the chassis 3. Specifically, but not necessarily, the seat 13 is defined by a portion of the chassis 3, for example comprising or defined by a carbon fiber composite.

In particular, the seats 12, 13 have respective backrests 15, 16 defining, in turn, respective backrest surfaces 17, 18 for receiving a driver's and a passenger's back, respectively. In other words, the backrest surfaces 17, 18 are exposed in the passenger compartment 5 and facing forward according to the roll axis X. Alternatively or additionally, the backrest surfaces 17, 18, as well as the backrests 15, 16, extend vertically.

The backrest 15, in particular, could further be reclining around an axis parallel to the pitch axis Y, without this affecting the validity of the characteristics set forth above and in the following. In other words, the other characteristics described herein continue to be valid regardless of whether the backrest 15 is reclining.

More in particular, the backrest surface 18 is arranged, for example entirely, behind or posteriorly the backrest surface 17 according to the roll axis X. For example, a distance between a point of the backrest surface 17 and a point of the backrest surface 18 according to the roll axis X is indicated by reference symbol R in Figure 4.

Alternatively or additionally, the backrests 15, 17 have respective upper ends or edges 19, 20, with the upper edge 20 arranged behind or posteriorly the upper edge 19.

Preferably, the seats 12, 13 have respective front ends according to the roll axis X which define respective seating portions 21, 22 with seating surfaces 23, 24 facing upward to receive the driver's and the passenger's legs, respectively.

The seating portions 21, 22 or the seating surfaces 23, 24 end anteriorly with respective front edges 25, 26. The edge 25 has at least one point arranged more forward than any point of the edge 26, i.e. relative to the entire edge 26, according to the roll axis X.

In a manner independent of the above details, the body 2 preferably comprises an intermediate portion or protrusion or tunnel 30 which extends longitudinally (i.e. according to the roll axis X) between the seats 12, 13 and/or the sitting areas 9, 10 according to the pitch axis Y.

The intermediate portion 30 is elevated or protruding upward (i.e. according to the yaw axis Z) relative to respective portions 31, 32 of the floor P of the body 2 or of the passenger compartment 5 in the area of the sitting areas 9, 10, respectively.

More in detail, between the intermediate portion 30 and the door 7 according to the pitch axis Y, namely in the area of the sitting area 9, the floor or platform P defines a hollow or depression (in particular with upward concavity) which accommodates at least one part of the seat 12.

According to a non-limiting embodiment, as for example illustrated in Figure 4, the expression "between the intermediate portion 30 and the door 7 according to the pitch axis Y, namely in the area of the sitting area 9" implies that the sitting area 9 is laterally delimited according to the pitch axis Y by the intermediate portion 30 on one side and by the door 7 on the other side.

According to a non-limiting embodiment, as for example illustrated in Figures 2 and 4, in the sitting area 9 there are no further elevated intermediate portions of the body 2 (relative to the floor P) between the door 7 in the closed configuration and the intermediate portion 30 according to the pitch axis Y.

Independently, between the intermediate portion 30 and the door 8 according to the pitch axis Y, namely in the area of the sitting area 10, the floor or platform P defines a further hollow or depression (in particular with upward concavity) defining, in particular directly, at least one part of the seat 13.

According to a non-limiting embodiment, as for example illustrated in Figure 4, the expression "between the intermediate portion 30 and the door 8 according to the pitch axis Y, namely in the area of the sitting area 10" implies that the sitting area 10 is laterally delimited according to the pitch axis Y by the intermediate portion 30 on one side and by the door 8 on the other side.

According to a non-limiting embodiment, as for example illustrated in Figures 2 and 4, in the sitting area 10 there are no further elevated intermediate portions of the body 2 (relative to the floor P) between the door 8 in the closed configuration and the intermediate portion 30 according to the pitch axis Y.

In particular, the intermediate portion 30 has or defines an upper face 33 facing upward and arranged between two opposite lateral ends 34, 35 of the intermediate portion 30 according to the pitch axis Y. The lateral ends 34, 35 are closer to the sitting areas 9, 10, respectively.

According to a non-limiting embodiment, as for example derivable from the drawings, the intermediate portion 30 is crossed by the vertical geometric centerline plane. In other words, according to a non-limiting embodiment, the intermediate portion 30 is central as it is crossed by the vertical geometric centerline plane.

Now, in particular, the description will follow of several preferred aspects, independent of one another, which could constitute inventions in their own right, regardless of the fact that the seat 13 has a rearward position relative to the seat 12 or is defined by surfaces of the body 2.

For example, according to a preferred aspect, a minimum longitudinal distance H (according to the roll axis X, i.e. along an axis parallel to it), namely the smallest distance possible, between the dashboard 6 and the backrest surface 17 is greater than a longitudinal distance K (according to the roll axis X, i.e. along an axis parallel to it), for example maximum or the largest distance possible or any longitudinal distance, between the dashboard 6 and the backrest surface 18.

In particular, this is valid for the distances K, H lying on axes parallel to each other and the roll axis X, as well as having the same vertical height or relative to the yaw axis Z, or coplanar on a plane which is horizontal or orthogonal to the yaw axis Z.

More in detail, as is visible in Figure 4, the distance H is calculated between the points of intersection that are closer to each other of the relative axis parallel to the roll axis X with the dashboard 6 and the backrest surface 17, just as the distance K is calculated between the points of intersection that are closer to each other of the relative axis parallel to the roll axis X with the dashboard 6 and the backrest surface 18.

According to a further preferred aspect, for example independent of the previous one, the seat 13 is closer to the intermediate portion 30 than the seat 12 along an axis parallel to the pitch axis Y. In practice, specifically, while the seat 13 can also be a continuation, in particular seamless (i.e. in an integral and indistinguishable manner), of the intermediate portion 30 along the pitch axis Y (ergo, there is a zero distance or a maximum closeness between seat 13 and intermediate portion 30), the seat 12 is spaced apart from the intermediate portion 30 according to the pitch axis Y or the above-mentioned axis parallel to it.

According to a further preferred aspect, for example independent of the previous one, a distance L in the area of the sitting area 9 along an axis W parallel to the pitch axis Y between the door 7 in the closed configuration and the intermediate portion 30 is greater than a distance M in the area of the sitting area 10 along the axis W between the intermediate portion 30 and the door 8 in the closed configuration. In other words, the distance L differs from the distance M by a non-zero deficit G.

In practice, the sitting area 9 occupies a width (according to the pitch axis Y) greater than that occupied by the sitting area 10.

In particular, this is valid for any axis W that is parallel to the pitch axis Y and crosses both the doors 7, 8, and the intermediate portion 30 or more precisely the lateral ends 34, 35 thereof.

More in particular, as is visible in Figure 4, the distance L is calculated between the points of intersection closer to each other of the axis W with the door 7 and the intermediate portion 30 or the lateral end 34, just as the distance M is calculated between the points of intersection closer to each other of the axis W with the door 8 and the intermediate portion 30 or the lateral end 35.

According to a non-limiting embodiment, for example with reference to what is illustrated in Figure 4, the expression "in the area of the sitting area" referred to a distance between the distances L, M implies a location of the same distance between the distances L, M entirely within the relative sitting area, namely that the distance L is calculated or measured or is entirely located within the sitting area 9 or measures the entire length of a segment (more in particular extending from one to the other one of the relative points of intersection mentioned above) entirely lying within the sitting area 9 on the axis W, and that the distance M is calculated or measured or is entirely located within the sitting area 10 or measures the entire length of a segment (more in particular extending from one to the other one of the relative points of intersection mentioned above) entirely lying within the sitting area 10 on the axis W.

Based on the foregoing, the advantages of the motor vehicle 1 according to the invention are evident.

For example, the passenger compartment 5 is compacted both in width (according to the pitch axis Y) and in height (according to the yaw axis Z) with a suitable dimensioning and positioning of the sitting area 10 relative to the sitting area 9, in particular so that the sitting area 10 for the passenger results to be slightly in the background relative to the sitting area 9, so that the motor vehicle 1 looks more like a one-seat, rather than a two-seat motor vehicle.

The fact that the seat 13 is defined, in particular directly by inner surfaces of the body 2 involves a remarkable saving of space and facilitates the suitable dimensioning and positioning mentioned above.

Similarly, the rearward position of the seat 13 relative to the seat 12 also involves a saving of space which facilitates the suitable dimensioning and positioning mentioned above.

Finally, each of the preferred aspects and, independently, the rearward position of the seat 13 and/or the definition of the latter by means of the inner surfaces of the body 2, contribute to allowing a greater forward tapering of the front portion of the body 2, relative to the prior art.

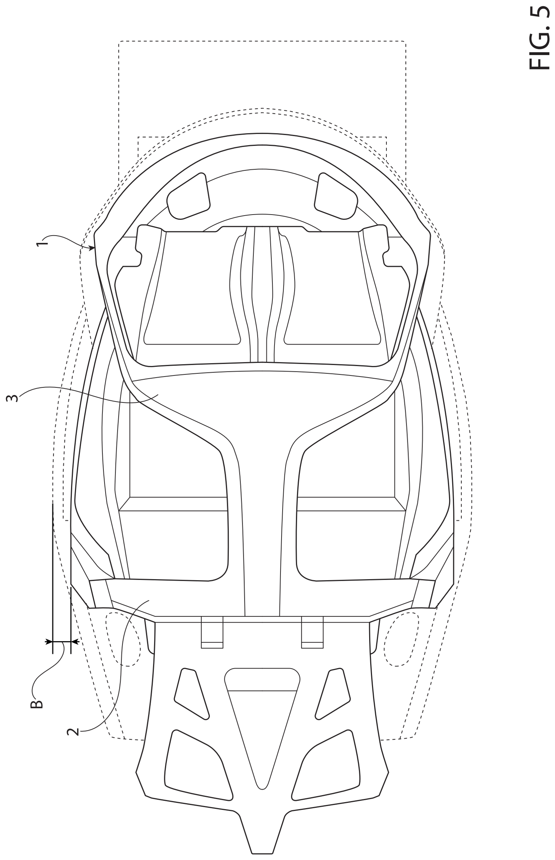

In fact, Figure 5 clearly illustrates how the motor vehicle 1 according to the invention is more tapered anteriorly, in particular in the area of the passenger compartment 5, than another motor vehicle according to the prior art, already particularly tapered anteriorly relative to the average of the known motor vehicles.

In Figure 5, a virtual distance between a lateral end of the motor vehicle 1 and a lateral end of the known motor vehicle is indicated by reference symbol B.

According to a non-limiting embodiment, the width of the passenger compartment 5 is a function of the rearward position of the seat 13 relative to the seat 12 and/or of the fact that the seat 13 is defined by the surfaces of the body 2 which are exposed in the passenger compartment 5.

Alternatively or additionally, for example, a front portion of the body 2 is tapered forward as a function of the rearward position of the seat 13 relative to the seat 12 and/or of the fact that the seat 13 is defined by the surfaces of the body 2 which are exposed in the passenger compartment 5.

Alternatively or additionally, for example, the width of the passenger compartment 5 is reduced, as a function of the rearward position of the seat 13 relative to the seat 12 and/or of the fact that the seat 13 is defined by the surfaces of the body 2 which are exposed in the passenger compartment 5, in comparison with the width of a further passenger compartment internally defined by a further body of a further motor vehicle having a further passenger compartment with two sitting areas for a driver and a passenger (e.g. respectively), the two sitting areas being aligned with each other according to a pitch axis of the further motor vehicle and respectively comprising two identical seats 12 distinct from the further body and supported by the further body above a portion of the further body.

Alternatively or additionally, the width of the passenger compartment 5 is a function of the smaller width occupied (according to the pitch axis Y) by the sitting area 10 or by the seat 13 than the width occupied (according to the pitch axis Y) by the sitting area 9 or by the seat 12 within the passenger compartment 5.

Alternatively or additionally, for example, a front portion of the body 2 is tapered forward as a function of the smaller width occupied (according to the pitch axis Y) by the sitting area 10 or by the seat 13 than the width occupied (according to the pitch axis Y) by the sitting area 9 or by the seat 12 within the passenger compartment 5.

Alternatively or additionally, for example, the width of the passenger compartment 5 is reduced, as a function of the smaller width occupied (according to the pitch axis Y) by the sitting area 10 or by the seat 13 than the width occupied (according to the pitch axis Y) by the sitting area 9 or by the seat 12 within the passenger compartment 5, in comparison with the width of a further passenger compartment internally defined by a further body of a further motor vehicle with the further passenger compartment having two further sitting areas for a driver and a passenger (e.g. respectively), the two further sitting areas being aligned with each other according to a pitch axis of the further motor vehicle and respectively comprising two identical seats 12, distinct from the further body, and supported by the further body above a portion of the further body.

Finally, it is clear that modifications and variations can be made to the motor vehicle 1 according to the invention which anyway do not depart from the scope of protection defined by the claims.

In particular, the number and the shape of each of the described and illustrated components could be different.

Furthermore, the additional characteristics of each of the dependent claims could constitute inventions in their own right described herein, namely could act as basis for one or more divisional applications, in replacement or in addition to the characterizing portions (followed by the expressions "characterized in that") of the independent claims.

More generally, each detail described or identifiable from the drawings can contribute in an independent manner to the solution of the needs indicated in the introductory part of this description and therefore can be considered in an isolated manner relative to the other details, namely in a manner not inextricably linked to the other details.

## Claims

1. Motor vehicle (1) having a roll axis (X) and a pitch axis (Y), as well as comprising a body (2) internally defining a passenger compartment (5) with a first and a second sitting area (9, 10) for a driver and a passenger of the motor vehicle, the first and second sitting areas (9, 10) being aligned with each other according to the pitch axis (Y) and comprising a first seat (12) and a second seat (13), respectively, the first seat (12) being distinct from the body (2) and supported by the body (2) above a portion (P) of the body (2), **characterized in that** the second seat (13) is fixed in a rearward position relative to the first seat (12) according to the roll axis (X).

2. The motor vehicle according to claim 1, wherein the first and second seats (12, 13) have a first and a second backrest (15, 16) respectively defining a first and a second backrest surface (17, 18) for receiving a driver's and a passenger's back, respectively, the second backrest surface (18) being arranged behind the first backrest surface (17) according to the roll axis (X).

3. The motor vehicle according to claim 2, further comprising a dashboard (6) within the passenger compartment (5), wherein a minimum longitudinal distance (H) according to the roll axis (X) between the dashboard (6) and the first backrest surface (17) is greater than a second maximum longitudinal distance (K) according to the roll axis (X) between the dashboard (6) and the second backrest surface (18).

4. The motor vehicle according to any one of the preceding claims, wherein the first and second seats (12, 13) have respective front ends according to the roll axis (X) defining respective seating portions (21, 22) with seating surfaces (23, 24) facing upward to receive the driver's and the passenger's legs, respectively, the seating portions (21, 22) ending anteriorly with a first front edge (25) of the first seat (12) and a second front edge (26) of the second seat (13), the first front edge (25) having at least one point arranged more forward than the entire second front edge (26) according to the roll axis (X).

5. The motor vehicle according to any one of the preceding claims, wherein the body (2) comprises an intermediate portion (30) extending longitudinally between the first and second seats (12, 13) and between the first and second sitting areas (9, 10) according to the pitch axis (Y), the intermediate portion (30) being elevated relative to respective portions (31, 32) of a floor (P) of the passenger compartment (5) in the area of the first and second sitting areas (9, 10).

6. The motor vehicle according to claim 5, wherein the second seat (13) is closer to the intermediate portion (30) along an axis parallel to the pitch axis (Y) than the first seat (12).

7. The motor vehicle according to claim 5, comprising a first and a second door (7, 8) each coupled to the body (2) in a movable manner between an open configuration to allow access into the passenger compartment (5) and a closed configuration to laterally delimit the passenger compartment (5), wherein a first distance (L) in the area of the first sitting area (9) along an axis (W) parallel to the pitch axis (Y) between the first door (7) in the closed configuration and the intermediate portion (30) is greater than a second distance (M) in the area of the second sitting area (10) along the same axis (W) parallel to the pitch axis (Y) between the intermediate portion (30) and the second door (8) in the closed configuration.

8. The motor vehicle according to claim 7, wherein the first distance is greater than the second distance for any said axis (W) parallel to the pitch axis (Y) and crossing both the first and second doors (7, 8) and the intermediate portion (30).

9. The motor vehicle according to claim 7 or 8, wherein the first door (7) in the closed configuration and the second door (8) in the closed configuration are laterally adjacent to the first sitting area (9) and the second sitting area (10), respectively.

10. The motor vehicle according to claim 9, wherein the first door (7) in the closed configuration and the second door (8) in the closed configuration are laterally contiguous with and/or marking the boundary of the first sitting area (9) and the second sitting area (10), respectively.

11. The motor vehicle according to any one of the claims from 7 to 10, wherein the first sitting area (9) occupies a width according to the pitch axis (Y) greater than that occupied by the second sitting area (10).

12. The motor vehicle according to claim 11, wherein the width occupied by the first sitting area (9) is greater than that occupied by the second sitting area (10) for any said axis (W) parallel to the pitch axis (Y) and crossing both the first and second doors (7, 8) and the intermediate portion (30).

13. The motor vehicle according to any one of the claims from 7 to 12, wherein the first distance (L) measures an entire first length of a first segment entirely lying within the first sitting area (9) on said axis (W), and wherein the second distance (M) measures an entire second length of a second segment entirely lying within the second sitting area (10) on said axis (W).

14. The motor vehicle according to any one of the claims from 7 to 13, wherein in the first sitting area (9) there are no further intermediate portions of the body (2) between the first door (7) in the closed configuration and the intermediate portion (30) according to the pitch axis (Y), the further intermediate portions being elevated relative to the floor (P), and/or wherein in the second sitting area (10) there are no further intermediate portions of the body (2) between the second door (8) in the closed configuration and the intermediate portion (30) according to the pitch axis (Y), the further intermediate portions being elevated relative to the floor (P).

15. The motor vehicle according to any one of the claims from 7 to 14, wherein the first sitting area (9) is laterally delimited according to the pitch axis (Y) by the intermediate portion (30) on one side and by the first door (7) on the other side, and/or wherein the second sitting area (10) is laterally delimited according to the pitch axis (Y) by the intermediate portion (30) on one side and by the second door (8) on the other side.

16. The motor vehicle according to any one of the claims from 5 to 15, wherein the intermediate portion (30) is a tunnel of the body (2).

17. The motor vehicle according to any one of the claims from 5 to 16, having a vertical geometric centerline plane, wherein the intermediate portion (30) is crossed by the vertical geometric centerline plane.

18. The motor vehicle according to any one of the preceding claims, wherein the first seat (12) is movable relative to the body (2) between a plurality of positions relative to the body (2).

19. The motor vehicle according to any one of the preceding claims, wherein the second seat (13) is directly defined by surfaces of the body (2), the surfaces of the body (2) being exposed in the passenger compartment (5).

20. The motor vehicle according to any one of the preceding claims, wherein the first and second sitting areas (9, 10) are for the driver and the passenger, respectively.

21. The motor vehicle according to any one of the preceding claims, wherein the first sitting area (9) occupies a width according to the pitch axis (Y) greater than that occupied by the second sitting area (10).

22. The motor vehicle according to any one of the preceding claims, having a vertical geometric centerline plane, wherein the first and second sitting areas (9, 10), and/or the first and second seats (12, 13), are off-center relative to the vertical geometric centerline plane.

23. The motor vehicle according to any one of the preceding claims, wherein the first seat (12) is the only seat of the first sitting area (9), and wherein the second seat (13) is the only seat of the second sitting area (10).

24. A motor vehicle having a pitch axis (Y) and comprising a body (2) internally defining a passenger compartment (5) with a first and a second sitting areas (9, 10) for a driver and a passenger of the motor vehicle respectively, the first and second sitting areas (9, 10) being aligned with each other according to the pitch axis (Y) and comprising a first seat (12) and a second seat (13) respectively, the first seat (12) being distinct from the body (2) and supported by the body (2) above a portion (P) of the body (2), **characterized in that** the second seat (13) is defined by surfaces of the body (2), the surfaces of the body (2) being exposed in the passenger compartment (5).
